# EUROPÄISCHE PATENTSCHRIFT

(11) **EP 2 674 328 B1**
(45) Veröffentlichungstag und Bekanntmachung des Hinweises auf die Patenterteilung: **10.06.2020**
(21) Anmeldenummer: 13171844.7
(22) Anmeldetag: 13.06.2013
(51) Int. Cl.: B60Q 1/32, B60Q 1/24, B60Q 3/80, B60Q 3/217

(54) **Verfahren zum Beleuchten eines Bereiches im Vorfeld und/oder im Innenraum eines Kraftfahrzeugs**
Method for illuminating an area to the front and/or in the interior of a motor vehicle
Procédé d'éclairage d'une zone devant et/ou à l'intérieur d'un véhicule

(30) Priorität: 14.06.2012 DE 102012011851
(43) Veröffentlichungstag der Anmeldung: 18.12.2013
(73) Patentinhaber: Volkswagen Aktiengesellschaft, 38440 Wolfsburg (DE)
(72) Erfinder: Richter, Beatrice, 38120 Braunschweig (DE); Studeny, Christian, 38440 Wolfsburg (DE); Koether, Gunnar, 38104 Braunschweig (DE); Sturmat, Sandra, 38102 Braunschweig (DE); Hinkfoth, Jörg, 38442 Wolfsburg (DE)

(56) Entgegenhaltungen:
- WO-A1-2005/035308
- DE-A1- 10 034 379
- DE-A1-102006 035 521
- DE-A1-102006 036 061
- JP-A- 2007 245 939
- JP-A- 2010 058 543
- JP-U- S63 169 339
- US-A1- 2007 053 195
- US-A1- 2009 122 565
- US-A1- 2011 115 375

## Beschreibung

Die Erfindung betrifft ein Verfahren zum Beleuchten eines Bereiches im Vorfeld und/oder im Innenraum eines Kraftfahrzeugs nach dem Oberbegriff des Patentanspruchs 1. Sie betrifft auch ein Kraftfahrzeug zur Durchführung des Verfahrens.

Es sind Verfahren und Kraftfahrzeuge aus der DE 198 05 771 A1 und der US 2005/0068785 A1 bekannt.

Aus der US 2011/115375 A1 ist ein Kraftfahrzeug bekannt, bei dem das Ein- oder Aussteigen eines Passagiers mit geringem Energieverbrauch erleichtert werden soll. Dies erfolgt dadurch, dass beim Entriegeln des Fahrzeugs zuvor eingeschaltete Handgriffleuchten sowie Scheinwerfer und Nebelleuchten ausgeschaltet und beim Öffnen der Tür eine Tür-Innenbeleuchtung zum Ausleuchten des Eingangsbereiches sowie weitere Innenbeleuchtungen zur Ausleuchtung des Innenraumes aktiviert werden.

In der JP S63 169339 U ist ein Kraftfahrzeug mit einer Schiebetür beschrieben. Beim Öffnen der Schiebetür wird über einen federbelasteten Mechanismus eine Beleuchtungseinrichtung im Öffnungsbereich nach außen geschwenkt und ein Ausstiegsbereich der Fahrbahn beleuchtet.

Bei der JP 2007 245939 A handelt es sich um ein Kraftfahrzeug mit einer Hilfsbeleuchtung, welche in einer Armlehne einer Tür integriert ist. Die Hilfsleuchte weist einen zentralen, weißes Licht ausstrahlenden Bereich, einen linksseitigen, rotes Licht ausstrahlenden Bereich und einen rechtsseitigen, blaues Licht ausstrahlenden Bereich auf. Beim Öffnen der Tür wird ein Lichtmuster erzeugt, bei dem das weiße, das rote und das blaue Licht in einem bestimmten Zeitverhältnis zyklisch wiederholend ausgestrahlt werden.

In der WO 2005/035308 A1 wird eine Beleuchtungsvorrichtung im Außenspiegel eines Kraftfahrzeugs beschrieben, welche zur Ausleuchtung eines Bereichs um das Fahrzeug dient. Die Ausleuchtung des Bereichs wird durch das Licht einer Leuchtdiode realisiert, welches durch ein Projektionselement in Form einer Freiformfläche in den auszuleuchtenden Bereich projiziert wird.

Derartige Verfahren dienen in erster Linie dazu, bei Dunkelheit den Boden um das Fahrzeug herum zu beleuchten (so genannte Vorfeldbeleuchtung), um so die Sicherheit und den Komfort der Fahrzeugnutzer beim Ein- und Aussteigen zu erhöhen.

Den oben bekannten Verfahren ist gemeinsam, dass die Beleuchtung "statisch" erfolgt, das heißt, es werden bei Aktivierung der Vorfeldbeleuchtung lediglich eine oder mehrere Lichtquellen aktiviert, welche unter einem konstruktiv vorgegebenen Abstrahlwinkel einen bestimmten, unveränderlichen Bereich neben dem Fahrzeug beleuchten.

In der DE 100 34 379 A1 wird ein Kraftfahrzeug beschrieben, bei dem einzelne Lichtquellen derart ansteuerbar sind, dass deren Strahlungsrichtung mit der Zeit veränderbar ist. Die Ansteuerung erfolgt über Ausgangssignale einer Kamera. Auf diese Weise soll es möglich sein, den Weg einer Person nach dem Verlassen des Kraftfahrzeugs bei Dunkelheit soweit wie möglich und so lange wie nötig auszuleuchten.

Die US 2009/0122565 A1 beschreibt ein System für einen schlüssellosen Einstieg (sogenannter Keyless Entry), bei dem die optische Rückkoppelung bei Betätigung einer Fernbedienung (Entriegeln/Verriegeln) durch die Ansteuerung der Außenbeleuchtung mittels unterschiedlicher PWM (Pulsweitenmodulations)-Signale abwechslungsreich gestaltet werden soll.

Aus der DE 10 2006 036061 A1 geht ein Kraftfahrzeug mit einem Digitalprojektor hervor, welcher in einem Kofferraum oder in einer Seitentür angeordnet sein kann. Der Digitalprojektor ist automatisch beim Öffnen anschaltbar und beim Schließen ausschaltbar. Der Digitalprojektor soll zur Ausleuchtung einer Fläche 9 im Einstiegsbereich bzw. Kofferaum und/oder zur Erzeugung einer Information auf einer zu bestrahlenden Fläche dienen.

Die US 2007/0053195 A1 schlägt eine optische Warnvorrichtung vor, welche sichtbares Licht erzeugt und auf einen Untergrund projiziert wird und so einen verbotenen Bereich markieren soll. Die Warnvorrichtung kann beispielsweise als in den Rückspiegel eines Kraftfahrzeugs integrierte Beleuchtungseinrichtung ausgebildet sein. Sie wird typischerweise bei niedrigem Umgebungslicht, bei Fahrbahnwechsel oder auch bei einem Stop des Fahrzeugs aktiviert.

Die DE 10 2006 035521 A1 offenbart ein Kraftfahrzeug, bei dem in einer Seitentür eine Beleuchtungseinrichtung mit auf einer Leiste angeordneten Lichtquellen integriert ist. Beim Öffnen der Seitentür sind die Lichtquellen zeitlich nacheinander einschaltbar und leuchten somit über Lichtfächer einen zwischen Kraftfahrzeug und geöffneter Tür befindlichen Ausleuchtbereich aus. Der zeitliche Ein- oder Ausschaltvorgang kann zudem mit dem Öffnungswinkel der Seitentür korreliert sein.

Schließlich kann der JP 2010 058543 A ein Fahrzeug mit einer Beleuchtungsvorrichtung an der Außenwand im bodennahen Bereich des Fahrzeugs entnommen werden. Die Beleuchtungsvorrichtung besteht aus einer in Längsrichtung des Fahrzeugs verlaufenden Leiste, an der in einer Reihe abwechselnd erste LED-Einheiten und zweite LED-Einheiten angeordnet sind. Wenn das Entriegeln des Fahrzeugs fahrzeugseitig erfasst wird, so leuchten zunächst die ersten LED-Einheiten und beleuchten einen ersten Bereich eines Bodens im Einstiegsbereich des Fahrzeugs, der außerhalb der Türen liegt. Beim Öffnen einer Tür erlöschen die ersten LED-Einheiten bzw. es erlischt der anfangs beleuchtete Bereich und die zweiten LED-Einheiten beginnen zu leuchten. Dies führt zu einer Beleuchtung eines anderen Bereichs im Einstiegsbereich des Fahrzeugs, der zwischen der geöffneten Tür und dem Fahrzeug liegt.

Es ist wünschenswert, diese mitunter zu nüchtern und "unemotional" anmutenden Verfahren neu zu gestalten.

Der vorliegenden Erfindung liegt die Aufgabe zu Grunde, ein gattungsgemäßes Verfahren zum Beleuchten eines Bereiches im Vorfeld und/oder im Innenraum eines Kraftfahrzeugs nach dem Oberbegriff von Patentanspruch 1 derart weiterzubilden, dass dies für die Fahrzeugnutzer attraktiver und emotionaler wirkt.

Diese Aufgabe wird mit den kennzeichnen Merkmalen von Patentanspruch 1 gelöst. Vorteilhafte Ausführungen beziehungsweise Weiterbildungen der Erfindung sind den jeweiligen Unteransprüchen entnehmbar.

Die Erfindung geht dabei aus von einem Verfahren zum Beleuchten eines Bereiches im Vorfeld und/oder im Innenraum eines Kraftfahrzeugs, wobei die Beleuchtung in Zusammenhang mit dem Entriegeln oder Öffnen bzw. mit dem Schließen oder Verriegeln einer Tür, Klappe oder dergleichen des Kraftfahrzeugs aktiviert wird.
Es ist ferner vorgesehen, dass die Beleuchtung zumindest für eine bestimmte Zeitdauer derart erfolgt, dass der beleuchtete Bereich für einen Beobachter als sich verändernd erscheint.
In der Regel wird die Zeitspanne nur vergleichsweise kurz sein und im Bereich von wenigen Sekunden liegen.

Eine Veränderung des beleuchteten Bereiches ist in erster Linie dahingehend zu verstehen, dass dieser sich vergrößert, verkleinert, seine Form ändert oder sogar als Ganzes seinen Ort wechselt. Auch andere Veränderungen sind denkbar, beispielsweise, dass der beleuchtete Bereich in seiner Helligkeit oder Frequenz variiert wird.

Im Rahmen der Erfindung erscheint beim Entriegeln der Tür, Klappe oder dergleichen zunächst nur ein Teil des beleuchteten Bereichs und wird anschließend mit steigendem Öffnungswinkel der beleuchtete Bereich vergrößert. Hierdurch wird beim Entriegeln und darauf folgenden Einsteigen ein besonders einprägsamer optischer Effekt erzielt.

Für Fahrzeugnutzer (Fahrzeugführer und Mitfahrer sind vorwiegende Beobachter) wird somit ein vollkommen neuartiges Einsteig- beziehungsweise Aussteiggefühl erzeugt. Es entsteht ein neuartiger, moderner und technisch hochwertiger erster Eindruck vom Fahrzeug. Das Verfahren ist dabei nicht nur auf das Ein- oder Aussteigen und das damit einhergehende Türöffnen beschränkt, sondern kann auch auf das Öffnen und Schließen andere Klappen des Fahrzeugs (beispielsweise Motorhaube oder Kofferraumdeckel/Heckklappe) angewandt werden. Bei Einsatz des erfindungsgemäßen Verfahrens im Bereich eines Kofferraumdeckels/einer Heckklappe kann durch einen sich verändernden, beleuchteten Bereich zudem die Aufgabe übernommen werden, vor einer schwingenden Klappe zu "warnen".

Gemäß der Erfindung ist vorgesehen, dass die Beleuchtung derart erfolgt, dass der beleuchtete Bereich in der Art eines sich ausrollenden Lichtteppichs erscheint. Für die ein- oder aufsteigende Person entsteht somit das Gefühl, dass das Fahrzeug für sie ein Teppich aus Licht ausrollt. Man fühlt sich vom Fahrzeug willkommen geheißen.

Es ist höchst vorteilhaft, wenn der beleuchtete Bereich durch Projektion erzeugt wird. Durch Projektion kann der beleuchtete Bereich am flexibelsten verändert werden.

Alternativ kann der beleuchtete Bereich auch durch zeitlich gesteuertes Zuschalten und/oder Abschalten von Leuchtmitteln erzeugt und verändert werden. Als Leuchtmittel sind vorzugsweise LEDs einzusetzen, weil diese Leuchtmittel leicht ansteuerbar, sparsam und zuverlässig sind.

Das zeitlich gesteuerte Zuschalten und/oder Abschalten von Leuchtmitteln kann in zweckmäßiger Weiterbildung der Erfindung zumindest für einen bestimmten Zeitraum zyklisch wiederholt werden. Hierdurch kann ein besonders intensiver optischer Eindruck auf einen Beobachter realisiert werden.

Die Erfindung betrifft aber auch ein Kraftfahrzeug zur Durchführung des erfindungsgemäßen Verfahrens, wobei das Kraftfahrzeug wenigstens ein Mittel aufweist zum Beleuchten eines Bereiches im Vorfeld und/oder im Innenraum eines Kraftfahrzeugs und wobei die Beleuchtung in Zusammenhang mit dem Entriegeln oder Öffnen bzw. mit dem Schließen oder Verriegeln einer Tür, Klappe oder dergleichen des Kraftfahrzeugs aktivierbar ist. Das wenigstens eine Mittel ist derart ansteuerbar, dass der beleuchtete Bereich für einen Beobachter als sich verändernd erscheint.

Ein derartiges Kraftfahrzeug weist ein technisch hochwertig anmutendes "Verhalten" beziehungsweise Erscheinungsbild auf.

Wenn dabei in Verwirklichung der Erfindung vorgesehen ist, das wenigstens eine Mittel als Projektionsvorrichtung auszubilden, wird eine hohe Flexibilität in der Möglichkeit der Veränderung des beleuchteten Bereiches ermöglicht. Unter Projektionsvorrichtung kann auch eine Vorrichtung in der Art eines Beamers verstanden werden.

Hierbei kann auch vorgesehen sein, Parameter für die Ansteuerung der Projektionsvorrichtung vom Fahrzeugnutzer über ein Bedienungsmenü der Bordelektronik veränderbar zu gestalten. Parameter können beispielsweise geometrische Form, Anfangsgröße, Endgröße, Position, Helligkeit und dergleichen des beleuchteten Bereichs sein.

Gemäß einer alternativen Verwirklichtung der Erfindung besteht das wenigstens eine Mittel aus mindestens zwei Lichteinheiten, welche zu einem Lichtmodul zusammengefasst sind. Die Lichteinheiten sind geometrisch durch Abschottungen (z.B. tubusartige Hohlkörper) voneinander getrennt. Dabei weist jede Lichteinheit eine wenigstens einer Lichtquelle zugeordnete Lichteintritts- und Lichtaustrittsöffnung auf. Die Lichteinheiten sind unterschiedlich ausgestaltet und/oder innerhalb des Lichtmoduls unterschiedlich ausgerichtet.

Ein solches Lichtmodul ist sehr robust gegen Erschütterungen, die bspw. im Fahrbetrieb auf unebener Fahrbahn oder auch beim Zuschlagen einer Fahrzeugtür auftreten können.

Bei Verwendung von tubusartigen Hohlkörper können diese beispielsweise runde, ovale oder auch eckige Querschnitte aufweisen. Dabei wird eine auf dem Boden im Vorfeld oder im Innenaum erzeugte Abbildung durch die Begrenzung des Lichtabstrahlkegels der Lichtquelle aufgrund des tubusartigen Hohlkörpers erzeugt.

Das wenigstens eine Mittel kann sehr zweckmäßig im unteren Bereich einer Türverkleidung angeordnet sein. Die Lichtaustrittsöffnungen der tubusartigen Hohlkörper sind dabei in Richtung Boden gerichtet, wobei die Lichtaustrittsöffnungen mit einer Abschlussscheibe oder einem optischen Element versehen sein können.

Eine Verwirklichung der Erfindung sieht vor, dass das wenigstens eine Mittel ein aus wenigstens zwei Projektoren bestehendes Projektionsmodul ist, denen jeweils ein diartiges Element mit wenigstens einem durchleuchtbaren Bereich zugeordnet ist, wobei die Projektoren unterschiedliche Abstrahlrichtungen aufweisen und die diaartigen Elemente zumindest hinsichtlich ihrer durchleuchtbaren Bereiche unterschiedlich ausgebildet sind.

Insbesondere ist es dabei zweckmäßig, dass jedem Projektor eine Lichtquelle (bspw. LED-Platine) zugeordnet ist, der in Lichtabstrahlrichtung wenigstens eine Linsenoptik, das diaartige Element sowie eine Abschlussoptik folgen, wobei die jedem Projektor zugeordneten Bauteile von einem tubusartigen Element umgeben sind.

Auf diese Weise lässt sich das wenigstens eine Mittel kostengünstig, kompakt und funktionssicher realisieren.

Bevorzugte Ausführungsbeispiele der Erfindung sind in den Zeichnungen dargestellt und werden in der nachfolgenden Beschreibung näher erläutert. Dabei beziehen sich gleiche Bezugszeichen auf gleiche, vergleichbare oder funktional gleiche Bauteile, wobei entsprechende oder vergleichbare Eigenschaften und Vorteile erreicht werden, auch wenn eine wiederholte Beschreibung weggelassen ist.

Es zeigen, jeweils schematisch
- Fig. 1: ein erfindungsgemäßes Kraftfahrzeug zur Durchführung des erfindungsgemäßen Verfahrens in einer Draufsicht,
- Fig. 2: eine Draufsicht auf ein erfindungsgemäßes Kraftfahrzeug zur Durchführung eines erfindungsgemäßen Verfahrens gemäß einer zweiten Ausführungsform,
- Fig. 3: eine Ansicht des Kraftfahrzeugs gemäß Ansicht III aus Fig. 1,
- Fig. 4: eine Ansicht des Kraftfahrzeugs gemäß Ansicht IV aus Fig. 1,
- Fig. 5: eine Ansicht eines Kraftfahrzeugs im Fußbereich vor den Vordersitzen mit einer weiteren Ausführungsform des Verfahrens,
- Fig. 6: eine Ansicht im Einstiegsbereich des Kraftfahrzeugs, ebenfalls mit einer weiteren Ausführungsform des Verfahrens,
- Fig. 7: eine Beleuchtungsvorrichtung zur Beleuchtung des Vorfeldes oder des Innenraums,
- Fig. 8: eine Beleuchtungsvorrichtung, insbesondere zur Beleuchtung des Vorfeldes gemäß einer anderen Ausführungsform,
- Fig. 9: die Darstellung einer durch die Beleuchtungsvorrichtung gem. Fig. 8 erzeugbaren Abbildungen,
- Fig. 10: eine Beleuchtungsvorrichtung, insbesondere zur Beleuchtung des Fußraums gemäß einer weiteren Ausführungsform,
- Fig. 11: der Aufbau eines zur Beleuchtungsvorrichtung gem. Fig. 10 gehörigen Projektors,
- Fig. 12: die Darstellung der durch die Beleuchtungsvorrichtung gem. Fig. 10 erzeugbaren Abbildungen und
- Fig. 13: ein Kraftfahrzeug mit Beleuchtungsvorrichtungen nach den Fig. 8 und 10.

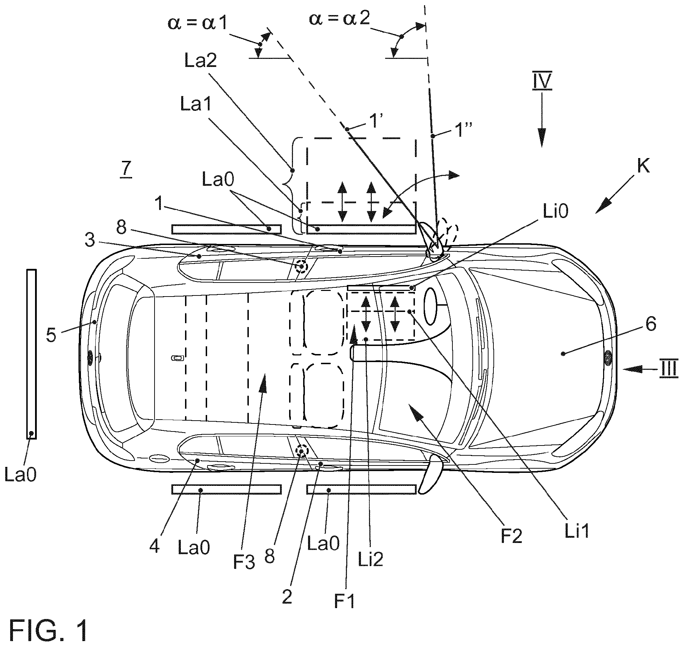

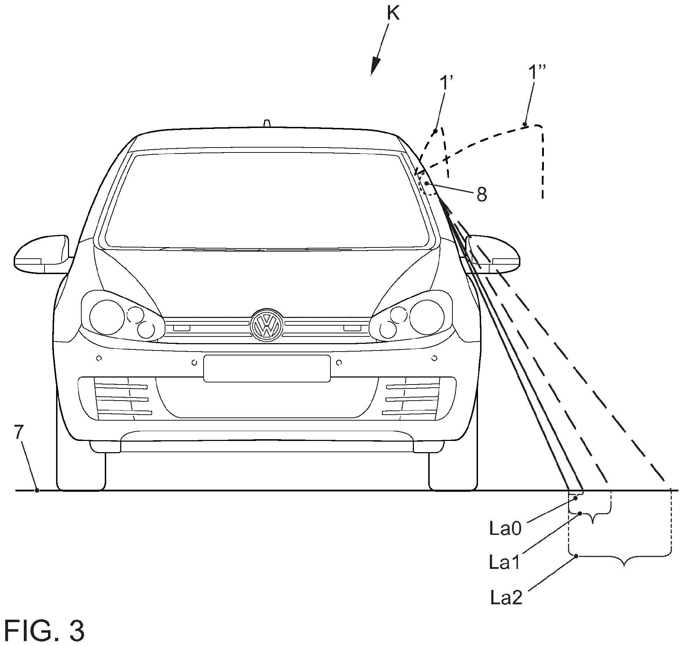

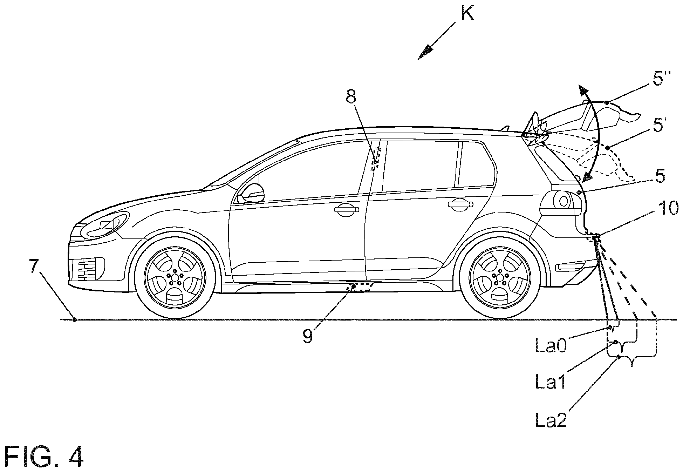

Zunächst wird auf die Figuren 1,3 und 4 Bezug genommen.

Darin ist ein Kraftfahrzeug K ersichtlich, welches mit frei programmierbaren bzw. ansteuerbaren Projektionsvorrichtungen 8 oder 9 und 10 ausgestattet ist. Das Kraftfahrzeug K weist ferner eine Fahrertür 1, eine Beifahrertür 2, zwei hintere Türen 3 und 4, eine Heckklappe 5 sowie eine Motorhaube 6 auf.

Des Weiteren sind Fußräume des Fahrers, des Beifahrers sowie der Fond-Insassen mit F1, F2 und F3 beziffert. Das Kraftfahrzeug K steht auf einem Boden bzw. einer Fahrbahn 7.

Die Projektionsvorrichtung 8 (gestrichelt angedeutet) ist dabei im Bereich der B-Säule untergebracht. Wie ersichtlich, können weitere Projektionsvorrichtungen alternativ oder ergänzend auch an anderer geeigneter Stelle, beispielsweise im Bereich der Türschweller, angeordnet sein. Eine Projektionsvorrichtung im Bereich der Türschweller ist mit dem Bezugszeichen 9 angedeutet.

Die Projektionsvorrichtungen 8 bzw. 9 sind dabei für eine (Vorfeld)Beleuchtung im Einstiegsbereich der Fahrzeugtüren 1 bis 4, also im Bereich der Fußräume F1-F3 und im Bereich des Bodens 7, und die Projektionsvorrichtung 10 für eine Vorfeldbeleuchtung im Bereich der Heckklappe 5 vorgesehen.

Wird nun beispielsweise von einem Fahrzeugnutzer das Kraftfahrzeug K entriegelt oder der Türgriff mit der Hand berührt, so werden zunächst mittels der Projektionsvorrichtung 8 kleine, streifenartige Teile La0 eines beleuchteten Bereiches La2 auf dem Boden bzw. der Fahrbahn 7 erzeugt. Wird nun eine Fahrertür (hier die Fahrertür 1) um einen Öffnungswinkel α=α1 geöffnet (1'), so vergrößert sich jeweils der beleuchtete Bereich La0 in Abhängigkeit des Öffnungswinkels α zu einem beleuchteten Bereich La1. Bei weiterem Öffnen der Fahrertür 1 bis zu einem maximalen Öffnungswinkel α=α2 (1"), vergrößert sich der beleuchtete Bereich La1 zu einem beleuchteten Bereich La2.

Ausgehend von dem streifenartigen, beleuchteten Bereich La0 in Nähe des Einstiegsbereiches der Fahrertür 1, vergrößert sich dieser in Abhängigkeit des Öffnungswinkels α der Fahrertür 1 also nach Art eines sich ausrollenden Lichtteppichs, und zwar vom Fahrzeug weg, in Richtung auf eine gedachte Bedienperson.

In gleicher Weise wird im Fußraum F1 des Fahrers über die Projektionsvorrichtung 9 ein Lichtteppich (Li0, Li1,Li2) erzeugt, wobei sich dieser Lichtteppich allerdings in entgegen gesetzter Richtung ausbreitet, also ausgehend vom Einstiegsbereich der Fahrertür 1 hin zu einer nicht näher bezifferten Mittelkonsole.

Wird die Fahrertür 1 wieder geschlossen, so werden die Lichtteppiche in Abhängigkeit des Tür-Öffnungswinkels α wieder "eingerollt" (vergleiche Doppelpfeile).

Unabhängig vom gezeigten Ausführungsbeispiel kann die Bewegungsrichtung des Ausrollens bzw. Einrollens jedoch auch in entgegen gesetzter beziehungsweise anderer Richtung verlaufen. Auch ist es denkbar, beim Schließen der Tür die Lichtteppiche nicht einzurollen, sondern diese zunächst in voller Größe stehen zu lassen und erst später nach dem Schließen der Tür ggf. mit einem geringen Zeitverzug verschwinden oder "verblassen" zu lassen.

Auch ist es möglich, statt zwei Lichtteppichen (außen und innen) nur einen der beiden Lichtteppiche zu aktivieren. All dies kann wiederum vorteilhaft über ein Bedienmenü der Bordelektronik durch den Fahrzeugnutzer eingestellt werden.

Beim Öffnen und Schließen der Heckklappe 5 ist in ähnlicher Weise wie im Zusammenhang mit der Tür 1 über die Projektionsvorrichtung 10 ein sich ausrollender und einrollender Lichtteppich La0, La1, La2 erzeugbar.

So wird beim Entriegeln des Fahrzeugs K zunächst der Teil La0 des Lichtteppichs erzeugt, in Öffnungsstellung 5' der Heckklappe 5 der vergrößerte Teil La1 und bei voll geöffneter Heckklappe (5") der Lichtteppich ebenfalls in voller Größe (La2) projiziert.

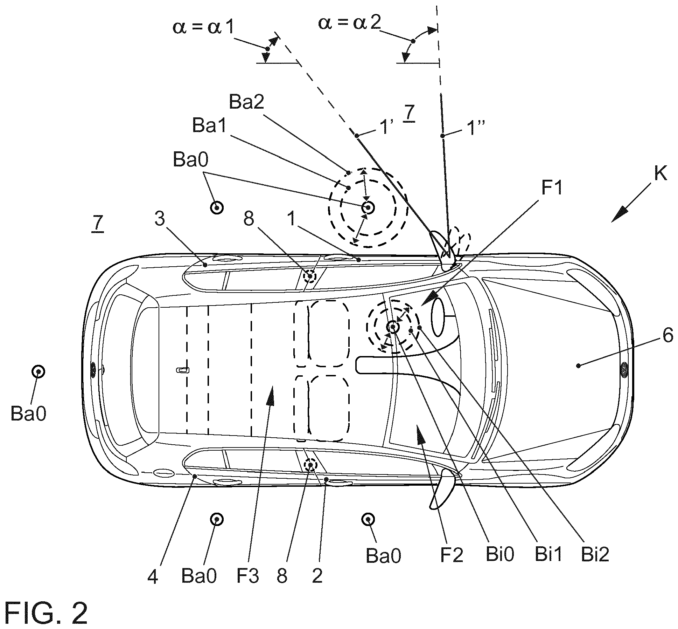

Nochmals Bezug nehmend auf Fig. 2 wird noch ein zweites Ausführungsbeispiel für das erfindungsgemäße Verfahren beschrieben.

Im Unterschied zum Ausführungsbeispiel der Figuren 1, 3 und 4 werden keine beleuchteten Bereiche nach Art eines Lichtteppichs erzeugt, sondern die beleuchteten Bereiche sind als kreisförmige Flächen ausgestaltet.

Beim Entriegeln des Fahrzeugs K werden zunächst mittels der Projektionseinrichtungen 8,9 wiederum nur kleine Teile/Kreisflächen (BaO, Bi0) der beleuchteten Bereiche erzeugt, die dann in Abhängigkeit des Öffnungswinkels α einer Tür (hier Tür 1) bzw. durch eine zeitliche Steuerung (Verzögerung) radial vergrößert bzw. verkleinert werden. Bei einer Türposition 1' werden größere Kreisflächen Ba1 und Bi1, bei einer Türposition 1" noch größere Kreisflächen Ba2 und Bi2 erzeugt.

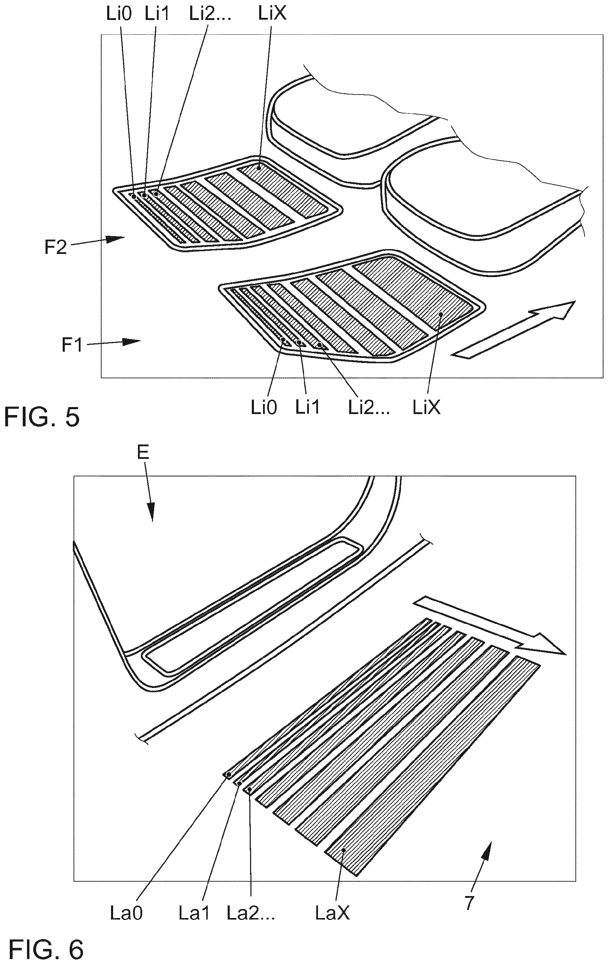

Anhand von Fig. 5, welche ein Kraftfahrzeug im Fußbereich vom Fahrer (F1) und Beifahrer (F2) zeigt, sind beleuchtete Bereiche ersichtlich, die sich wiederum nach Art eines Lichtteppichs ausbreiten. Im Unterschied zu den zuvor beschriebenen Ausführungsbeispielen breiten sich die Lichtteppiche, ausgehend von einem ersten, kleinen Teil Li0 im Bereich der Pedalerie (nicht dargestellt), jedoch in Richtung auf die Vordersitze aus (vgl. Pfeil). Zudem bestehen die Lichtteppiche nicht aus vollflächig ausgeleuchteten Bereichen, sondern aus diskreten, geringfügig beabstandeten Bereichen Li0, Li1, Li2 und so weiter, bis zu einem beleuchteten Bereich Lix bei voll geöffneter Tür. Die beleuchteten Bereiche Li0 bis Lix können dabei in ihrer Größe zunehmen oder aber auch jeweils eine konstante Größe aufweisen. Sie besitzen in ihrem Umriss jeweils eine in etwa rechteckige Form. In jedem Fall nimmt die Größe des gesamten Ausleuchtungsbereiches zu.

In ähnlicher Weise wird ein Lichtteppich gemäß Fig. 6 außerhalb eines Fahrzeugs nahe einem Einstiegsbereich E auf dem Boden 7 erzeugt. Hierbei breitet sich der Lichtteppich, ausgehend von einem ersten, kleinen Teil La0, über weitere Teile La1, La2 in Richtung vom Fahrzeug weg bis zu einem Teil Lax bei voll geöffneter Tür aus (vgl. Pfeil).

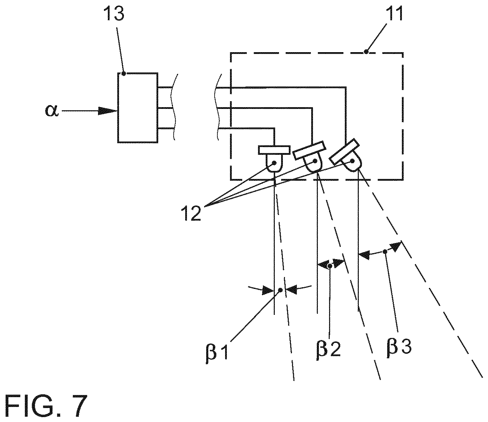

Schließlich ist in Fig. 7 noch eine Beleuchtungsvorrichtung 11 dargestellt, welche anstelle oder ergänzend zu den Projektionsvorrichtungen 8,9,10 eingesetzt werden kann. Die Beleuchtungsvorrichtung 11 weist dabei mehrere LEDs 12 auf, welche über eine Steuerleitung mit einer geeigneten Steuereinrichtung 13 verbunden sind. Zur Erzeugung eines Lichtteppichs wie bereits beschrieben, ist die Steuereinrichtung 13 mit einem nicht näher dargestellten Winkelgeber einer Fahrzeugtür signaltechnisch verbunden, so dass der Öffnungswinkel α der jeweiligen Tür als Eingangsgröße dienen kann. In Abhängigkeit vom Öffnungswinkel α können nun die LEDs 12 angesteuert werden, welche unterschiedliche Anstellwinkel β1, β2 und β3 aufweisen. Hierdurch sind unterschiedliche Bereiche in einem Vorfeld oder Fußraum dynamisch beleuchtbar.

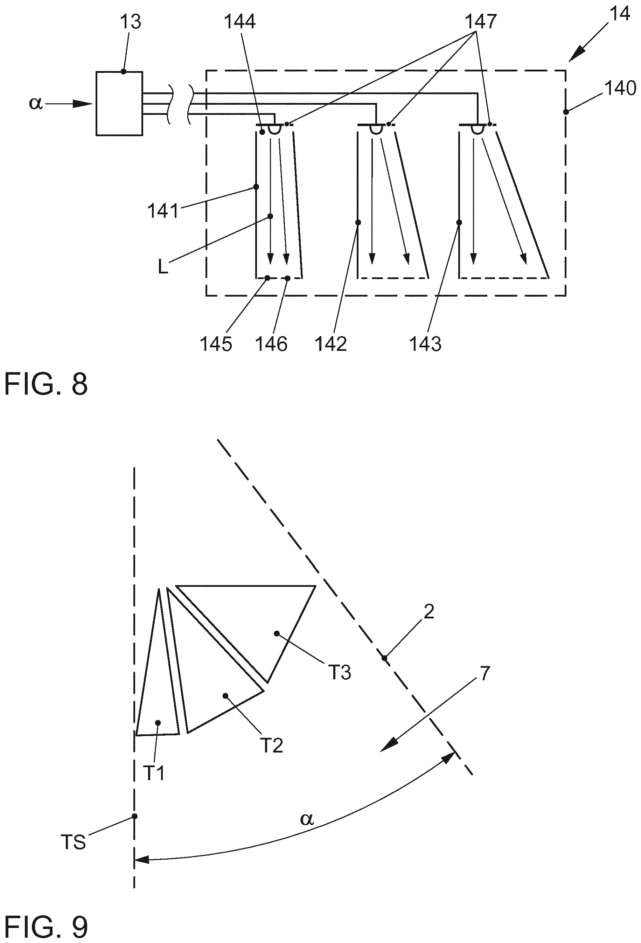

In der Fig. 8 ist ein Lichtmodul 14 dargestellt, welches ein Gehäuse 140 aufweist, in dem drei tubusartige Hohlkörper 141, 142 und 143 angeordnet sind. Die tubusartigen Hohlkörper 141-143 haben einen dreieckförmigen Querschnitt, wobei jedem der Hohlkörper 141-143 im Bereich einer Lichteintrittsöffnung 144 eine LED-Platine 147 zugeordnet ist. In Abstrahlrichtung von erzeugbaren Lichtstrahlen L weist jeder Hohlkörper 141-143 im Bereich einer Lichtaustrittsöffnung 145 eine Lichtscheibe 146 (gestrichelt angedeutet) auf. Anstatt der Lichtscheibe 146 kann auch ein optisches, bspw. linsenartiges Element eingesetzt werden. Die Hohlkörper 141-143 haben unterschiedliche geometrische Abmessungen und sind quer zur Abstrahlrichtung lichtdicht ausgebildet, dienen also einer gegenseitigen Lichtabschottung. Sie können zusätzlich hinsichtlich ihrer Abstrahlrichtung auch noch unterschiedlich ausgerichtet sein.

Bedingt durch die geometrische Form und Ausrichtung der Hohlkörper 141-143 sind bei entsprechender Ansteuerung der LED-Platinen 147 mittels einer geeigneten Steuereinrichtung 13 tortenstückartige Abbildungen T1-T3 erzeugbar. Die Abbildungen T1-T3 sind vorzugsweise in Abhängigkeit eines Öffnungswinkels α einer Tür 2 auf einem Boden 7 zwischen der Tür 2 und einem Türschweller TS erzeugbar (vgl. auch Fig. 9).

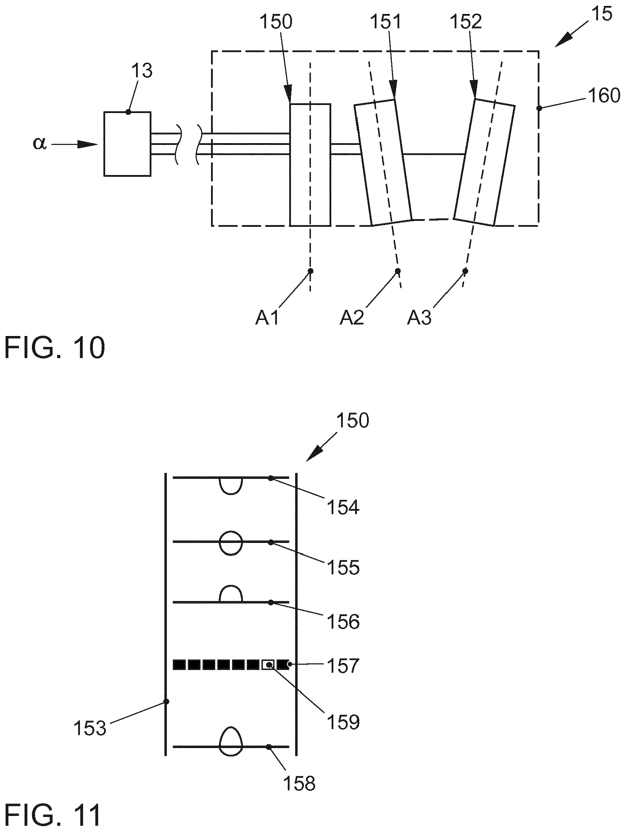

In Fig. 10 ist eine Projektionsvorrichtung dargestellt. Konkret ist ein Projektionsmodul 15 mit einem Gehäuse 160 ersichtlich, in dem drei Projektoren 150, 151 und 152 mit unterschiedlichen Abstrahlrichtungen A1, A2 und A3 angeordnet sind.

Stellvertretend für jeden Projektor ist in Fig. 11 der Aufbau des Projektors 150 näher beschrieben. So ist zunächst eine LED-Platine 154 vorhanden, der in Lichtabstrahlrichtung gesehen zunächst eine bikonvexe und dann eine plankonvexe Kondensorlinse nachgeschaltet sind. Dieser Linsenoptik folgt dann ein diaartiges Element 157 mit wenigstens einem streifenartigen, durchleuchtbaren Bereich 159. Schließlich ist als Abschlussoptik eine asphärische Objektivlinse 158 vorhanden.

Die vorgenannten Bauteile sind von einem tubusartigen, vorzugsweise kreisrunden Element 153 umgeben, welches radial nach außen lichtdicht ist.

Die in den Projektoren 150-152 vorhandenen, diaartigen Elemente sind verschieden ausgebildet, weisen also unterschiedliche, durchleuchtbare Bereiche auf.

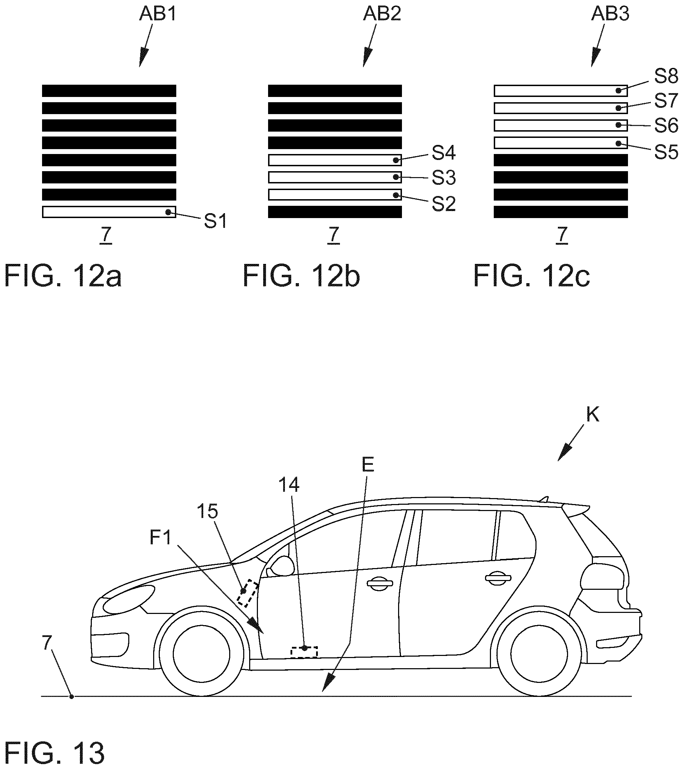

In den Figuren 12 a bis c ist dargestellt, welche Abbildungen AB1 bis AB3 in Abhängigkeit des Schaltzustandes des Projektionsmoduls 15 auf einem Boden 7 erzeugbar sind:
So wird in Fig. 12a der Projektor 150 durch eine Steuereinrichtung 13 (vgl. Fig. 10) angesteuert. Da das diaartige Element 157 nur einen streifenartigen, durchleuchtbaren Bereich 159 aufweist, enthält die auf dem Boden 7 projizierte Abbildung AB1 folglich auch nur einen sichtbaren Streifen S1. Dunkel dargestellte Streifen S2-S8 sind in diesem Schaltzustand nicht sichtbar und dienen nur der Orientierung über den Abbildungsfortschritt. In einem anderen Schaltzustand des Projektionsmoduls 15 (vgl. Fig. 12b) wird der Projektor 151 angesteuert, welcher, bedingt durch das in ihm verbaute diaartige Element, eine aus Streifen S2 bis S4 bestehende Abbildung AB2 erzeugt.
Schließlich wird in einem dritten Schaltzustand des Projektionsmoduls 15 über die Steuereinrichtung 13 der Projektor 152 angesteuert und eine Abbildung AB3 mit einem aus Streifen S5 bis S8 bestehenden Streifenmuster erzeugt (Fig. 12c). Durch Kombination bzw, eine Abfolge der beschriebenen Schaltzustände wird das finale Muster abgebildet bzw. sukzessive aufgebaut.

Die Ansteuerung des Projektionsmoduls kann wiederum in Abhängigkeit eines Türöffnungswinkels α erfolgen. Das heißt, bei kleinem Türöffnungswinkels α wird beispielsweise lediglich die Abbildung AB1 erzeugt, während bei großem Türöffnungswinkels α alle drei Abbildungen AB1 bis AB3 nacheinander erzeugt werden.
Es ist zudem denkbar, dass die Ansteuerung der Projektoren 150 bis 152 zumindest für einen bestimmten Zeitraum zyklisch wiederholt wird, so dass für einen Beobachter der Eindruck entsteht, dass eine Art Lichtteppich immer wieder aufs Neue ausgerollt wird.

Schließlich ist in Fig. 13 ein Kraftfahrzeug K dargestellt, in dem sowohl das Lichtmodul 14 im unteren Bereich einer Türverkleidung als auch das Projektionsmodul 15 im Bereich des Fahrer-Fußraums F1 verbaut ist.

Die Erfindung ist nicht auf das bzw. die obigen Ausführungsbeispiele beschränkt. Diese wurden nur zur allgemeinen Erläuterung des Kerngedankens der Erfindung herangezogen. Die Erfindung kann im Rahmen ihres Schutzumfangs vielmehr auch andere als die zuvor beschriebenen Ausführungsbeispiele bzw. Ausprägungen annehmen.

### Bezugszeichenliste

- 1: Fahrertür
- 2: Beifahrertür
- 3: hintere linke Tür
- 4: hintere rechte Tür
- 5: Heckklappe
- 6: Motorhaube
- 7: Boden bzw. Fahrbahn
- 8: Projektionsvorrichtung
- 9: Projektionsvorrichtung
- 10: Projektionsvorrichtung
- 11: Beleuchtungsvorrichtung
- 12: LED
- 13: Steuereinrichtung
- 14: Lichtmodul zum Beleuchten des Bodens bzw. der Fahrbahn
- 140: Gehäuse
- 141: erster tubusartiger Hohlkörper
- 142: zweiter tubusartiger Hohlkörper
- 143: dritter tubusartiger Hohlkörper
- 144: Lichteintrittsöffnung
- 145: Lichtaustrittsöffnung
- 146: Lichtscheibe
- 147: LED-Platine
- 15: Projektionsmodul zum Beleuchten des Innen-/Fußraums
- 150: Projektor
- 151: Projektor
- 152: Projektor
- 153: tubusartiges Element
- 154: LED-Platine
- 155: bikonvexe Kondensorlinse
- 156: plankonvexe Kondensorlinse
- 157: diaartiges Element
- 158: asphärische Objektivlinse
- 159: durchleuchtbarer Bereich
- 160: Gehäuse

- α: Öffnungswinkel einer Tür
- β: Anstellwinkel für LED
- A1-A3: Abstrahlrichtungen
- AB1-AB3: Abbildungen
- Ba0: Beleuchteter Bereich außen bei einer Fahrzeug-Entriegelung
- Ba1: Beleuchteter Bereich außen bei einem Tür-Öffnungswinkels α1
- Ba2: Beleuchteter Bereich außen bei einem Tür-Öffnungswinkels α2
- Bi0: Beleuchteter Bereich innen bei einer Fahrzeug-Entriegelung
- Bi1: Beleuchteter Bereich innen bei einem Tür-Öffnungswinkels α1
- Bi2: Beleuchteter Bereich innen bei einem Tür-Öffnungswinkels α2
- E: Einstiegsbereich
- F1: Fahrer-Fußraum
- F2: Beifahrer-Fußraum
- F3: Fond-Fußraum
- K: Kraftfahrzeug
- L: Lichtstrahlen
- La0: Lichtteppich außen bei einer Fahrzeug-Entriegelung
- La1: Lichtteppich außen bei einem Tür-Öffnungswinkels α1
- La2: Lichtteppich außen bei einem Tür-Öffnungswinkels α2
- Li0: Lichtteppich innen bei einer Fahrzeug-Entriegelung
- Li1: Lichtteppich innen bei einem Tür-Öffnungswinkels α1
- Li2: Lichtteppich innen bei einem Tür-Öffnungswinkels α2
- T1-T3: tortenstückartige Abbildungen
- TS: Türschweller
- S1-S8: Streifen

## Patentansprüche

1. Verfahren zum Beleuchten eines Bereiches (Ba0-Ba2, Bi0-Bi2; La0-La2,Li0-Li2; Li0-Lix; La0-Lax; T1-T3; S1-S8) im Vorfeld (7) und/oder im Innenraum (F1,F2,F3) eines Kraftfahrzeugs (K), wobei die Beleuchtung in Zusammenhang mit dem Entriegeln oder Öffnen bzw. mit dem Schließen oder Verriegeln einer Tür (1-4), Klappe (5,6) oder dergleichen des Kraftfahrzeugs (K) aktiviert wird, wobei die Beleuchtung derart erfolgt, dass der beleuchtete Bereich (Ba0-Ba2, Bi0-Bi2; La0-La2,Li0-Li2; Li0-Lix; La0-Lax; T1-T3; S1-S8) für einen Beobachter als sich verändernd erscheint, **dadurch gekennzeichnet, dass** beim Entriegeln der Tür (1-4) oder einer Heckklappe (5) zunächst nur ein Teil (La0,Li0) des beleuchteten Bereichs (La0-La2,Li0-Li2; Li0-Lix; La0-Lax) in Nähe des Einstiegsbereichs der Fahrzeugtür (1-4) oder auf dem Boden (7) im Bereich der Heckklappe (5) erscheint und anschließend mit steigendem Öffnungswinkel (α) der beleuchtete Bereich (La0,Li0) vergrößert wird, wobei die Beleuchtung derart erfolgt, dass der beleuchtete Bereich (La0-La2,Li0-Li2; Li0-Lix; La0-Lax; S1-S8) in der Art eines sich ausrollenden Lichtteppichs erscheint.

2. Verfahren nach Anspruch 1, **dadurch gekennzeichnet, dass** der beleuchtete Bereich (La0-La2,Li0-Li2; Li0-Lix; La0-Lax; S1-S8) durch Projektion erzeugt wird.

3. Verfahren nach Anspruch 1, **dadurch gekennzeichnet, dass** der beleuchtete Bereich (La0-La2,Li0-Li2; Li0-Lix; La0-Lax; S1-S8) durch zeitlich gesteuertes Zuschalten und/oder Abschalten von Leuchtmitteln (12, 147, 150-152) erzeugt wird.

4. Verfahren nach Anspruch 3, **dadurch gekennzeichnet, dass** das zeitlich gesteuerte Zuschalten und/oder Abschalten von Leuchtmitteln (12, 147, 150-152) zumindest für einen bestimmten Zeitraum zyklisch wiederholt wird.

5. Kraftfahrzeug (K) zur Durchführung des Verfahrens nach einem der vorhergehenden Ansprüche, wobei dieses wenigsten ein Mittel (8-11, 14,15) aufweist zum Beleuchten eines Bereiches (Ba0-Ba2, Bi0-Bi2; La0-La2,Li0-Li2; Li0-Lix; La0-Lax; T1-T3; S1-S8) im Vorfeld (7) und/oder im Innenraum (F1-F3) des Kraftfahrzeugs (K), wobei die Beleuchtung in Zusammenhang mit dem Entriegeln oder Öffnen bzw. mit dem Schließen oder Verriegeln einer Tür (1-4), Klappe (5,6) oder dergleichen des Kraftfahrzeugs (K) aktivierbar ist, wobei das wenigstens eine Mittel (8-11,14,15) derart ansteuerbar ist, dass der beleuchtete Bereich (Ba0-Ba2, Bi0-Bi2; La0-La2,Li0-Li2; Li0-Lix; La0-Lax; T1-T3; S1-S8) für einen Beobachter als sich verändernd erscheint, **dadurch gekennzeichnet, dass** das wenigstens eine Mittel (8-11,14,15) derart ansteuerbar ist, dass beim Entriegeln der Tür (1-4) oder einer Heckklappe (5) zunächst nur ein Teil (BaO, Bi0; La0,Li0) des beleuchteten Bereichs (Ba0-Ba2, Bi0-Bi2; La0-La2,Li0-Li2; Li0-Lix; La0-Lax) in Nähe des Einstiegsbereichs der Fahrzeugtür (1-4) oder auf dem Boden (7) im Bereich der Heckklappe (5,6) erscheint und anschließend mit steigendem Öffnungswinkel (α) der beleuchtete Bereich (BaO, Bi0; La0,Li0) vergrößert wird, wobei das wenigstens eine Mittel (8-11,14,15) derart ansteuerbar ist, dass der beleuchtete Bereich (La0-La2,Li0-Li2; Li0-Lix; La0-Lax; S1-S8) in der Art eines sich ausrollenden Lichtteppichs erscheint und wobei das wenigstens eine Mittel (15) ein aus mehreren Projektoren (150-152) bestehendes Projektionsmodul ist, denen jeweils ein diaartiges Element (157) mit wenigstens einem durchleuchtbaren Bereich (159) zugeordnet ist, wobei die Projektoren (150-152) unterschiedliche Abstrahlrichtungen (A1-A3) aufweisen und die diaartigen Elemente (157) zumindest hinsichtlich ihrer durchleuchtbaren Bereiche (159) unterschiedlich ausgebildet sind oder wobei das wenigstens eine Mittel (14) ein aus mindestens zwei Lichteinheiten (141,142,143) bestehendes Lichtmodul ist, wobei jede Lichteinheit (141,142,143) eine wenigstens einer Lichtquelle (147) zugeordnete Lichteintritts- (144) und Lichtaustrittsöffnung (145) aufweist und die Lichteinheiten (141-143) unterschiedlich ausgestaltet und/oder innerhalb des Lichtmoduls (14) unterschiedlich ausgerichtet sind.

6. Kraftfahrzeug (K) nach Anspruch 5, **dadurch gekennzeichnet, dass** das wenigstens eine Mittel (14) im unteren Bereich einer Türverkleidung angeordnet ist ist, im Falle einer Beleuchtung in Nähe des Einstiegsbereichs.

7. Kraftfahrzeug (K) nach Anspruch 6, **dadurch gekennzeichnet, dass** in dem Fall die Mittel zum Beleuchten ein aus mehreren Projektoren bestehendes Projektionsmodul ist, jedem Projektor (150-152) eine Lichtquelle (154) zugeordnet ist, der in Lichtabstrahlrichtung wenigstens eine Linsenoptik (155,156), das diaartige Element (157) sowie eine Abschlussoptik (158) folgen, wobei die jedem Projektor (150-152) zugeordneten Bauteile (154-158) von einem tubusartigen Element (153) umgeben sind.

## Claims

1. Method for illuminating a region (Ba0-Ba2, Bi0-Bi2; La0-La2, Li0-Li2; Li0-Lix; La0-Lax; T1-T3; S1-S8) in the area ahead (7) and/or in the interior (F1, F2, F3) of a motor vehicle (K), wherein the illumination is activated in connection with the unlocking or opening or with the closing or locking of a door (1-4), lid (5,6) or the like of the motor vehicle (K), wherein the illumination is effected such that the illuminated region (Ba0-Ba2, Bi0-Bi2; La0-La2, Li0-Li2; Li0-Lix; La0-Lax; T1-T3; S1-S8) appears to an observer to be changing, **characterized in that**, when the door (1-4) or a tailgate (5) is unlocked, initially only a part (LaO, Li0) of the illuminated region (La0-La2, Li0-Li2; Li0-Lix; La0-Lax) appears in the vicinity of the entrance region of the vehicle door (1-4) or on the ground (7) in the region of the tailgate (5), and subsequently the illuminated region (LaO, Li0) increases in size as the opening angle (α) increases, wherein the illumination is effected such that the illuminated region (La0-La2, Li0-Li2; Li0-Lix; La0-Lax; S1-S8) appears in the manner of a light carpet that is being rolled out.

2. Method according to Claim 1, **characterized in that** the illuminated region (La0-La2, Li0-Li2; Li0-Lix; La0-Lax; S1-S8) is produced by projection.

3. Method according to Claim 1, **characterized in that** the illuminated region (La0-La2, Li0-Li2; Li0-Lix; La0-Lax; S1-S8) is produced by switching light-emitting means (12, 147, 150-152) on and/or off in a time-controlled manner.

4. Method according to Claim 3, **characterized in that** the switching on and/or off of light-emitting means (12, 147, 150-152) in a time-controlled manner is cyclically repeated at least for a specific time period.

5. Motor vehicle (K) for performing the method according to one of the preceding claims, wherein said motor vehicle (K) has at least one means (8-11, 14,15) for illuminating a region (Ba0-Ba2, Bi0-Bi2; La0-La2, Li0-Li2; Li0-Lix; La0-Lax; T1-T3; S1-S8) in the area ahead (7) and/or in the interior (F1-F3) of the motor vehicle (K), wherein the illumination is able to be activated in connection with the unlocking or opening or with the closing or locking of a door (1-4), lid (5,6) or the like of the motor vehicle (K), wherein the at least one means (8-11, 14,15) is drivable such that the illuminated region (Ba0-Ba2, Bi0-Bi2; La0-La2, Li0-Li2; Li0-Lix; La0-Lax; T1-T3; S1-S8) appears to an observer to be changing, **characterized in that** the at least one means (8-11, 14,15) is drivable such that, when the door (1-4) or a tailgate (5) is unlocked, initially only a part (BaO, Bi0; La0, Li0) of the illuminated region (Ba0-Ba2, Bi0-Bi2; La0-La2, Li0-Li2; Li0-Lix; La0-Lax) appears in the vicinity of the entrance region of the vehicle door (1-4) or on the ground (7) in the region of the tailgate (5, 6), and subsequently the illuminated region (BaO, Bio; La0, Li0) increases in size as the opening angle (α) increases, wherein the at least one means (8-11, 14, 15) is drivable such that the illuminated region (La0-La2, Li0-Li2; Li0-Lix; La0-Lax; S1-S8) appears in the manner of a light carpet that is being rolled out and wherein the at least one means (15) is a projection module consisting of a plurality of projectors (150-152) which are assigned in each case a slide-type element (157) with at least one light-transmissive region (159), wherein the projectors (150-152) have different emission directions (A1-A3) and the slide-type elements (157) are embodied differently in terms of their light-transmissive regions (159) or wherein the at least one means (14) is a light module consisting of at least two light units (141, 142, 143), wherein each light unit (141, 142, 143) has a light entrance opening (144) and light exit opening (145) assigned to at least one light source (147) and the light units (141-143) have different designs and/or are differently oriented within the light module (14).

6. Motor vehicle (K) according to Claim 5, **characterized in that** the at least one means (14) is arranged in the lower region of a door trim for illumination in the vicinity of the entrance region.

7. Motor vehicle (K) according to Claim 6, characterized that, if the means for illumination is a projection module consisting of a plurality of projectors, each projector (150-152) is assigned a light source (154), followed, in the light emission direction, by at least one lens optical unit (155, 156), the slide-type element (157) and a terminating optical unit (158), wherein the components (154-158) assigned to each projector (150-152) are surrounded by a tube-type element (153) .

## Revendications

1. Procédé d'éclairage d'une zone (Ba0-Ba2, Bi0-Bi2 ; La0-La2, Li0-Li2 ; Li0-Lix ; La0-Lax ; T1-T3 ; S1-S8) située dans l'aire de stationnement (7) et/ou dans l'espace intérieur (F1, F2, F3) d'un véhicule automobile (K), l'éclairage étant activé en relation avec le déverrouillage ou l'ouverture ou avec la fermeture ou le verrouillage d'une porte (1-4), d'un volet (5, 6) ou analogue du véhicule automobile (K), l'éclairage étant effectué de telle manière que la zone éclairée (Ba0-Ba2, Bi0-Bi2 ; La0-La2, Li0-Li2 ; Li0-Lix ; La0-Lax ; T1-T3 ; S1-S8) soit perçue comme changeante pour un observateur, **caractérisé en ce que** lors du déverrouillage de la porte (1-4) ou d'un hayon (5), seule une partie (La0,Li0) de la zone éclairée (La0-La2, Li0-Li2 ; Li0-Lix ; La0-Lax) apparaît initialement près de la zone d'accès de la porte de véhicule (1-4) ou sur le sol (7) dans la zone du hayon (5) puis s'agrandit à mesure que l'angle d'ouverture (α) de la zone éclairée (La0, Li0) augmente, l'éclairage étant effectué de telle manière que la zone éclairée (La0-La2, Li0-Li2 ; Li0-Lix ; La0-Lax ; S1-S8) apparaisse à la manière d'un tapis de lumière déroulant.

2. Procédé selon la revendication 1, **caractérisé en ce que** la zone éclairée (La0-La2, Li0-Li2 ; Li0-Lix ; La0-Lax ; S1-S8) est générée par projection.

3. Procédé selon la revendication 1, **caractérisé en ce que** la zone éclairée (La0-La2, Li0-Li2 ; Li0-Lix ; La0-Lax ; S1-S8) est générée par allumage et/ou extinction, commandés dans le temps, de lampes (12, 147, 150-152).

4. Procédé selon la revendication 3, **caractérisé en ce que** l'allumage et/ou l'extinction, commandés dans le temps, des lampes (12, 147, 150-152) sont répétés cycliquement au moins pendant un intervalle de temps déterminé.

5. Véhicule automobile (K) destiné à la mise en œuvre du procédé selon l'une des revendications précédentes, ledit véhicule comportant au moins un moyen (8-11, 14, 15) destiné à éclairer une zone (Ba0-Ba2, Bi0-Bi2 ; La0-La2, Li0-Li2 ; Li0-Lix ; La0-Lax ; T1-T3 ; S1-S8) située dans l'aire de stationnement (7) et/ou dans l'espace intérieur (F1-F3) du véhicule automobile (K), l'éclairage pouvant être activé en relation avec le déverrouillage ou l'ouverture ou avec la fermeture ou le verrouillage d'une porte (1-4), d'un volet (5,6) ou similaire du véhicule automobile (K), l'au moins un moyen (8-11, 14, 15) pouvant être commandé de telle manière que la zone éclairée (Ba0-Ba2, Bi0-Bi2 ; La0-La2, Li0-Li2 ; Li0-Lix ; La0-Lax ; T1-T3 ; S1-S8) soit perçue comme changeante par un observateur, **caractérisé en ce que** l'au moins un moyen (8-11, 14, 15) peut être commandé de telle manière que lors du déverrouillage de la porte (1-4) ou d'un hayon (5) seule une partie (BaO, Bi0 ; La0, Li0) de la zone éclairée (Ba0-Ba2, Bi0-Bi2 ; La0-La2, Li0-Li2 ; Li0-Lix ; La0-Lax) apparaisse initialement près de la zone d'accès de la porte de véhicule (1-4) ou sur le sol (7) dans la zone du hayon (5, 6) puis s'agrandit à mesure que l'angle d'ouverture (α) de la zone éclairée (Ba0, Bi0 ; La0, Li0) augmente, l'au moins un moyen (8-11, 14, 15) pouvant être commandé de telle manière que la zone éclairée (La0-La2, Li0-Li2 ; Li0-Lix ; La0-Lax ; S1-S8) apparaisse à la manière d'un tapis de lumière déroulant et l'au moins un moyen (15) étant un module de projection comprenant une pluralité de projecteurs (150-152) de type diapositive à chacun desquels est associé un élément (157) pourvu d'au moins une zone (159) pouvant être illuminée par transparence, les projecteurs (150-152) présentant des directions de rayonnement différentes (A1-A3) et les éléments (157) de type diapositive étant conçus différemment au moins en ce qui concerne leurs zones (159) pouvant être illuminées par transparence ou l'au moins un moyen (14) étant un module de lumière comprenant au moins deux unités de lumière (141, 142, 143), chaque unité de lumière (141, 142, 143) comprenant une ouverture d'entrée de lumière (144) et une ouverture de sortie de lumière (145) associées à au moins une source de lumière (147), et les unités de lumière (141-143) étant conçues différemment et/ou étant orientées différemment à l'intérieur du module de lumière (14).

6. Véhicule automobile (K) selon la revendication 5, **caractérisé en ce que** l'au moins un moyen (14) est disposé dans la zone inférieure d'un habillage de porte, dans le cas d'un éclairage situé près de la zone d'accès.

7. Véhicule automobile (K) selon la revendication 6, **caractérisé en ce que**, dans le cas où les moyens d'éclairage sont un module de projection comprenant une pluralité de projecteurs, à chaque projecteur (150-152) est associée une source de lumière (154) suivie, dans la direction d'émission de lumière (155, 156), d'au moins une optique à lentilles, de l'élément (157) de type diapositive et d'une optique finale (158), les composants (154-158) associés à chaque projecteur (150-152) étant entourés d'un élément tubulaire (153).
